(19)

Europäisches
Patentamt

European
Patent Office

Office européen
des brevets

(11) **EP 3 011 706 B1**

(12) **EUROPEAN PATENT SPECIFICATION**

(45) Date of publication and mention
of the grant of the patent:
**13.09.2017 Bulletin 2017/37**

(21) Application number: **13733966.9**

(22) Date of filing: **19.06.2013**

(51) Int Cl.:
**H04L 12/54** (2013.01)    **H04L 12/869** (2013.01)
**G06F 9/48** (2006.01)    **G06F 9/54** (2006.01)
**H04L 12/931** (2013.01)

(86) International application number:
**PCT/EP2013/062717**

(87) International publication number:
**WO 2014/202128 (24.12.2014 Gazette 2014/52)**

(54) **P-SELECT N-PORT ROUND ROBIN ARBITER FOR SCHEDULING REQUESTS**

P-SELECT N-PORT ROUND ROBIN ARBITER ZUM EINTEILEN VON ANFORDERUNGEN

P-SELECT N-PORT ROUND ROBIN ARBITER POUR PLANIFIER DES DEMANDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.04.2016 Bulletin 2016/17**

(73) Proprietor: **Huawei Technologies Co., Ltd.
Longgang District
Shenzhen, Guangdong 518129 (CN)**

(72) Inventors:
• **SHACHAR, Yaron**
**80992 Munich (DE)**
• **PELEG, Yoav**
**80992 Munich (DE)**
• **TAL, Alex**
**80992 Munich (DE)**
• **XIONG, Lixia**
**80992 Munich (DE)**
• **LU, Yuchun**
**80992 Munich (DE)**
• **UMANSKY, Alex**
**80992 Munich (DE)**

(74) Representative: **Pfenning, Meinig & Partner mbB
Patent- und Rechtsanwälte
Joachimsthaler Straße 10-12
10719 Berlin (DE)**

(56) References cited:
• UGURDAG H F ET AL: "Fast
two-pickn2nround-robin arbiter circuit",
ELECTRONICS LETTERS, IEE STEVENAGE, GB,
vol. 48, no. 13, 21 June 2012 (2012-06-21) , pages
759-760, XP006040959, ISSN: 0013-5194, DOI:
10.1049/EL.2012.0307
• H. FATIH UGURDAG ET AL: "Generating fast
logic circuits for m-select n-port Round Robin
Arbitration", 2013 IFIP/IEEE 21ST
INTERNATIONAL CONFERENCE ON VERY
LARGE SCALE INTEGRATION (VLSI-SOC), 1
October 2013 (2013-10-01), pages 260-265,
XP055105351, DOI:
10.1109/VLSI-SoC.2013.6673286 ISBN:
978-1-47-990524-9
• FATIH UGURDAG H ET AL: "Fast parallel prefix
logic circuits for2round-robin arbitration",
MICROELECTRONICS JOURNAL, MACKINTOSH
PUBLICATIONS LTD. LUTON, GB, vol. 43, no. 8,
17 April 2012 (2012-04-17) , pages 573-581,
XP028492916, ISSN: 0026-2692, DOI:
10.1016/J.MEJO.2012.04.005 [retrieved on
2012-04-27]
• DIMITRAKOPOULOS G ET AL: "Dynamic-priority
arbiter and multiplexer soft macros for on-chip
networks switches", DESIGN,
AUTOMATION&TEST IN EUROPE
CONFERENCE&EXHIBITION (DATE), 2012, IEEE,
12 March 2012 (2012-03-12), pages 542-545,
XP032320777, DOI: 10.1109/DATE.2012.6176527
ISBN: 978-1-4577-2145-8

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GIORGOS PASSAS ET AL: "VLSI micro-architectures for high-radix crossbar schedulers", NETWORKS ON CHIP (NOCS), 2011 FIFTH IEEE/ACM INTERNATIONAL SYMPOSIUM ON, IEEE, 1 May 2011 (2011-05-01), pages 217-224, XP032003129,
- H F Ugurdag ET AL: "AN IN-DEPTH LOOK AT PRIOR ART IN FAST ROUND-ROBIN ARBITER CIRCUITS ÖZYEGiN UNIVERSITY TECHNICAL REPORT: OZU-EF-2011-0001", , 31 December 2011 (2011-12-31), XP055105414, Retrieved from the Internet: URL:http://eresearch.ozyegin.edu.tr/xmlui/ bitstream/handle/10679/159/OZU-EF-2011-000 1 FUgurdag.pdf?sequence=6 [retrieved on 2014-03-04]
- Anonymous: "Trie - Wikipedia, the free encyclopedia", , 14 June 2013 (2013-06-14), XP055105316, Retrieved from the Internet: URL:http://en.wikipedia.org/w/index.php?ti tle=Trie&oldid=559872098 [retrieved on 2014-03-04]
- DIMITRAKOPOULOS G ET AL: "Fast arbiters for on-chip network switches", COMPUTER DESIGN, 2008. ICCD 2008. IEEE INTERNATIONAL CONFERENCE ON, IEEE, PISCATAWAY, NJ, USA, 12 October 2008 (2008-10-12), pages 664-670, XP031407634, ISBN: 978-1-4244-2657-7

**Description**

BACKGROUND OF THE INVENTION

The present invention relates to a scheduling device, in particular to a high speed hardware scheduler.

High speed hardware schedulers are required in today's applications, specifically for traffic quality of service (QoS), distributing of tasks between CPU cores and other applications. A scheduler receives a set of requests or a set of input queues status and generate grants to those requests or input queues according to a scheduling scheme. Each grant can be interpreted as a permission to send a packet or a chunk of data, or use a shared resource.

The types of scheduling schemes vary from a simple round-robin to very complex schemes with several hierarchies, weights and priority levels. Standard hardware schedulers enable most common scheduling schemes but have a major cavity of too low grant rate. In this respect, two parameters are most important. The first one is the maximum grant rate a scheduler can produce. The second one is the minimum latency that exists from a request until it's grant.

Ugurdag et. Al. discuss in "Fast two-pick n2n round-robin arbiter circuit" (ELECTRONIC LETTERS, Vol. 48, No. 13, pages 759 - 760, 21. June 2012) a fast two-pick round-robin arbiter, which selects the two topmost requests from n inputs with priority order indicated by an internally kept pointer.

In previous prior art, hardware schedulers usually can perform not more than one grant per two clock cycles, while the latency can take a few to even a thousand cycles in order to serve a new request. This results from the complexity of the scheduling scheme.

SUMMARY

It is the object of the invention to provide a fast scheduler that grants requests in a rate higher than the system clock at low latency.

This object is achieved by the features of the independent claims. Further implementation forms are apparent from the dependent claims, the description and the figures.

In order to describe the invention in detail, the following terms, abbreviations and notations will be used:

| | |
|---|---|
| QoS: | quality of service, |
| CPU: | central processing unit, |
| RR: | round-robin, |
| RCS: | rate control shaper or rate limiting unit, |
| LVP: | lookup vector prepare unit, |
| PFF: | prefix forest unit, |
| req_vec: | set of requests or vector of requests, |
| ack_vec: | set of acknowledgements or vector of acknowledgements, |
| raw_mask: | set of selection masks or vector of selection masks, |
| CMP: | compare module, |
| NASO: | Not And Shift One module, |
| TE, Bld, Sel: | designate different queue groups which may have different priorities, |
| PD: | propagation delay, |
| FA, HA: | adders implementing the prefix tree. |

According to a first aspect, the invention relates to a scheduling device for receiving a set of requests and providing a set of grants to the set of requests, the scheduling device comprising: a lookup vector prepare unit configured to merge set of requests and a selection mask in order to provide a lookup vector prepared set of requests and to provide a set of acknowledgements to the set of requests; and a prefix forest unit coupled to the lookup vector prepare unit, wherein the prefix forest unit is configured to provide the set of grants as a function of the lookup vector prepared set of requests and to provide the selection mask based on the set of grants.

The scheduling device may be implemented as a synchronous hardware circuit scheduler. The scheduling device is able to select N requests, e.g. input queues, according to a scheduling scheme and the scheduling device is able to perform P selections or issues in each clock cycle. Thus, the scheduling device grants processing requests in a rate higher than the system clock at low latency.

The scheduling device can be used as a scheduler of tasks among CPUs, or scheduling of packets of data on a switching or routing element. It can also be used as a building block for a more complex scheduler in order to produce a more complex scheduling scheme. In this sense the scheduling device can be concatenating several task schedulers, configured differently in order to produce a hierarchical scheduling scheme.

In a first possible implementation form of the scheduling device according to the first aspect, the scheduling device comprises a rate limiting unit couple to the lookup vector prepare unit, wherein the rate limiting unit is configured to limit a rate of the set of requests according to a scheduling scheme for providing a rate-limited set of requests, accordingly, the set of requests merged by the lookup vector prepare unit is the rate-limited set of requests.

By rate-limiting the set of requests according to a scheduling scheme, the scheduling device is able to produce the hierarchical scheduling scheme.

In a second possible implementation form of the scheduling device according to the first implementation form of the first aspect, the rate limiting unit is configured to filter requests of request-groups that have passed a configurable rate of acknowledgments.

The rate limiting mechanism thus may be configured to implement a configurable rate-limiting.

When a queue has received an acknowledgement it is informed that a request will be granted and the queue can proceed sending the next request. The request, e.g. the queue, is thus informed about the internal state of the scheduling device.

In a third possible implementation form of the scheduling device according to any of the preceding implementation forms of the first aspect, the scheduling scheme is based on queue groups the set of requests and the set of acknowledgements are assigned to.

When different queue groups are implemented in the scheduling scheme the scheduling device can implement a priority scheduling where important requests are placed in a queue group of high priority.

In a fourth possible implementation form of the scheduling device according to the third implementation form of the first aspect, the rate limiting unit comprises a set of bucket buffers, each bucket buffer assigned to one of the queue groups for storing acknowledgements of the set of acknowledgements assigned to the one of the queue groups.

Different bucket buffers can realize the different queue groups. The bucket buffers may represent shaper buckets, e.g. shaper memories, for traffic shaping according to the scheduling scheme. Each bucket buffer can perform separately shaping of a queue group until the queue groups can be transmitted in compliance with the prevailing traffic contract. This may occur immediately if the bucket buffer assigned to the queue group is empty, after some delay if the bucket buffer assigned to the queue group is filled to some level or never in case of bucket buffer overflow.

In a fifth possible implementation form of the scheduling device according to the first aspect as such or according to any of the preceding implementation forms of the first aspect, the lookup vector prepare unit comprises: a masking unit for masking a current set of requests based on the selection mask to provide a masked set of requests; a joining unit for merging the masked set of requests with the rate-limited set of requests to provide the current set of requests; and a shifting unit for shifting the current set of requests based on a shifted version of the selection mask to provide the lookup vector prepared set of requests.

By masking the shifted set of requests based on the selection mask, requests not granted are processed by the lookup vector prepare unit in a recursive manner which is memory efficient and provides fast processing at low delays.

In a sixth possible implementation form of the scheduling device according to the fifth implementation form of the first aspect, the lookup vector prepare unit is configured to provide the shifted version of the selection mask for round-robin the rate-limited set of requests.

By performing round-robin, the lookup vector prepare unit can process each request within a specified time. The delay of the longest path is reduced resulting in low overall delays.

In a seventh possible implementation form of the scheduling device according to the first aspect as such or according to any of the preceding implementation forms of the first aspect, the prefix forest unit comprises a prefix tree.

A prefix tree is well suited for storing numbers of requests. Unlike most other algorithms, prefix trees have the peculiar feature that the code path, and hence the time required, is almost identical for insert, delete, and find operations. As a result, for situations where code is inserting, deleting and finding in equal measure, prefix trees can beat binary search trees, as well as provide a better basis for the CPU's instruction and branch caches.

In an eighth possible implementation form of the scheduling device according to the seventh implementation form of the first aspect, an output of the prefix forest unit is determined as a set Z of numbers and for each number $Z_i$ in Z it holds that $X_i+Y_i=Z_i$.

When the output of the forest is a set of numbers called Z and for each number $Z_i$ in Z the relation $X_i+Y_i=Z_i$ holds, instead of performing the actual addition there is the option to let the next phase of the mechanism, that is the comparing phase, use the raw material of $X_i$ and $Y_i$. The prefix forest unit can increase its efficiency and produce outputs at a higher speed.

In a ninth possible implementation form of the scheduling device according to the eighth implementation form of the first aspect, the prefix forest unit is configured to compare a couple of $X_i$ and $Y_i$ in Z to a known set of options.

Instead of comparing each number in Z to the relevant values, the prefix forest unit compares a couple to a known set of options and by that the prefix forest unit saves the latency that is caused by putting $X_i$ and $Y_i$ into an adding device. Thus, delay of the scheduling device is reduced.

In a tenth possible implementation form of the scheduling device according to the eighth or according to the ninth implementation form of the first aspect, the prefix tree is configured to provide for a number of N input values a number of P results, wherein the result $f_z(i)$ of the prefix tree for an input $v(i)$ and an integer number i is determined according to the following formula:

$$f_z(i : i \in \mathbb{N}) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}$$

The scheduling device according to the tenth implementation form enables parallel processing by providing P outputs when receiving N inputs. Therefore, processing is highly efficient. The result $f_z(i)$ of the prefix tree can be easily implemented in hardware using VLSI description, e.g. by using simple gates for implementing this function.

In an eleventh possible implementation form of the scheduling device according to the tenth implementation form of the first aspect, the prefix tree is configured to provide the selection mask in order to differentiate between the results being greater than P and the results being smaller or equal than P.

The selection mask thus can serve as a mask for the last vector of granted requests. In binary logic, for example, the selection mask provides an efficient way for controlling the scheduling.

According to a second aspect, the invention relates to a method for scheduling a set of requests and providing a set of grants to the set of requests, the method comprising: merging a set of requests and a selection mask in order to provide a lookup vector prepared set of requests and a set of acknowledgements to the set of requests; and providing the set of grants as a function of the lookup vector prepared set of requests and providing the selection mask based on the set of grants.

The scheduling method is able to select requests, e.g. input queues, according to a scheduling scheme and to perform selections or issues in each clock cycle. The scheduling method thus grants processing requests in a rate higher than the system clock at low latency.

In a first possible implementation form of the method according to the second aspect, the method further comprising limiting a rate of the set of requests according to a scheduling scheme in order to provide a rate-limited set of requests, accordingly, the set of requests merged by the lookup vector prepare unit is the rate-limited set of requests.

That allows flexibility in selecting the requests.

In a second possible implementation form of the method according to the first implementation form of the second aspect, the merging the set of requests and a selection mask comprises: masking a current set of requests based on the selection mask to provide a masked set of requests; merging the masked set of requests with the rate-limited set of requests to provide the current set of requests; and shifting he current set of requests based on a shifted version of the selection mask to provide the lookup vector prepared set of requests

Each request is efficiently processed. The method allows implementing a priority scheme for priority based processing of requests.

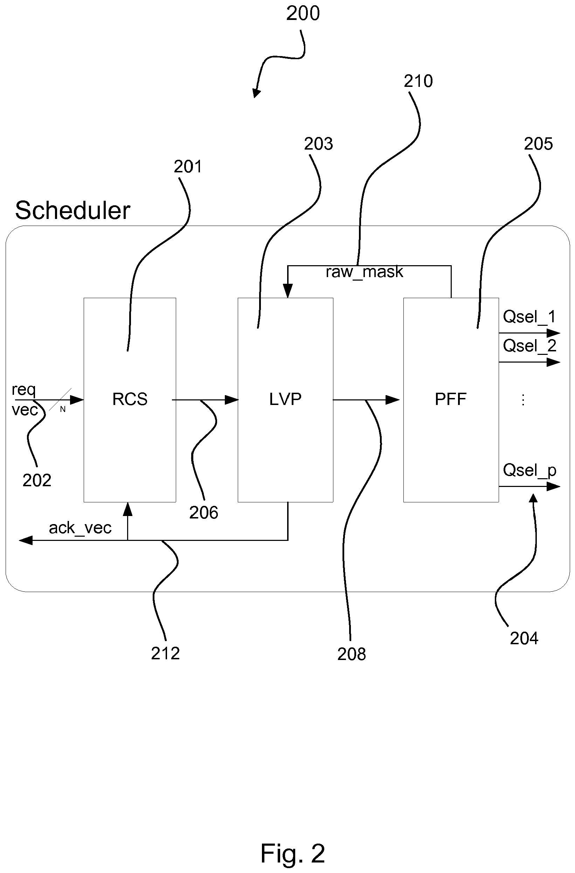

According to a third aspect, the invention relates to a scheduling device for receiving a set of requests and providing a set of grants to the set of requests, the scheduling device comprising: an interface 1110 and a processor 1120. The interface is adapted for receiving the set of requests 202, and outputting the set of grants 204 and the selection mask 210. One or more units of the previous embodiments according to Fig. 2 to Fig. 4 are in a form of a processor 1120, the processor 1120 performs the corresponding steps of the units in order to provide the functionalities thereof.

BRIEF DESCRIPTION OF THE DRAWINGS

Further embodiments of the invention will be described with respect to the following figures, in which:

Fig. 1 shows a block diagram of a scheduling scheme according to an implementation form;

Fig. 2 shows a block diagram of a scheduling device according to an implementation form;

Fig. 3 shows a block diagram of a scheduling device according to an implementation form;

Fig. 4 shows a block diagram of a rate limiting unit of a scheduling device according to an implementation form;

Fig. 5 shows a schematic diagram of prefix tree implemented in a prefix forest unit of a scheduling device according to an implementation form;

Fig. 6 shows a schematic diagram of a scheduling method according to an implementation form;

Fig. 7 shows a flow chart of merging 903 of the scheduling method 900 according to an implementation form, and

Fig. 8 shows a block diagram of a scheduling device 200 according to another implementation form.

DETAILED DESCRIPTION OF EMBODIMENTS OF THE INVENTION

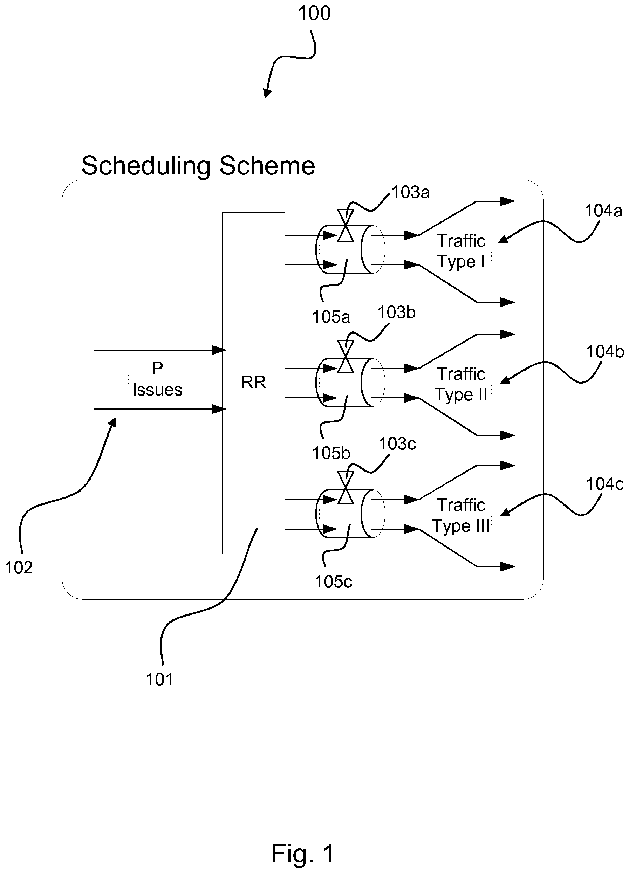

Fig. 1 shows a block diagram of a scheduling scheme 100 according to an implementation form. The scheduling scheme 100 performs a Round Robin (RR) 101 between the requests 102 with aggregated bandwidth limitations, called shaping, on different traffic types 104a, 104b, 104c although different types of scheduling can be applied using the same mechanism.

The scheduler scheme 100 implements a simple scheduling arbitration that includes a simple round-robin 101 and a rate-limiting mechanism 103a, 103b, 103c for a fixed amount of traffic types 104a, 104b and 104c. A first rate-limiting 103a is performed for a first traffic type 104a by using a first shaper bucket 105a, e.g. a memory implementing a bucket. A second rate-limiting 103b is performed for a second traffic type 104b by using a second shaper bucket 105b, e.g. a memory implementing a bucket. A third rate-limiting 103c is performed for a third traffic type 104c by using a third shaper bucket 105c, e.g. a memory implementing a bucket. Each type bandwidth is limited according to a configurable rate, and in case it exceeds its allowed bandwidth of grants, its requests are masked and grants are given to all remaining non-masked traffic types.

Fig. 2 shows a block diagram of a scheduling device 200 according to an implementation form. In an implementation form, the scheduling scheme 100 as described with respect to Fig. 1 is applied by the scheduling device 200. The scheduling device also called scheduler 200 is configured for receiving a set of requests "req vec", i.e. a request vector 202 and for providing a set of grants "Qsel_1, Qsel_2, ..., Qsel_p" 204 to the set of requests 202. In the implementation form depicted in Fig. 2 a size of the set of requests 202 is N, i.e. a number of N requests is input to the scheduling device 200. In the implementation form depicted in Fig. 2 a size of the set of grants 204 is P, i.e. a number of P grants is provided by the scheduling device 200. In an implementation form N requests are received by the scheduling device 200 in each clock cycle and P grants are provided by the scheduling device 200 in each clock cycle. In an implementation form, P acknowledgements 212 are provided by the scheduling device 200 according to the P grants 204 in each clock cycle.

The scheduling device 200 comprises a rate limiting unit, also called rate control shaper (RCS) 201, a lookup vector prepare unit (LVP) 203 and a prefix forest unit (PFF) 205. The rate limiting unit 201 is configured for limiting a rate of the set of requests 202 according to a scheduling scheme. The rate limiting unit 201 provides a rate-limited set of requests 206 based on the set of requests 202. The lookup vector prepare unit 203 is coupled to the rate limiting unit 201 such that an output of the rate limiting unit 201 is an input to the lookup vector prepare unit 203. In an implementation form, one or more functional or logical units are coupled into the path between output of the rate limiting unit 201 and input to the lookup vector prepare unit 203. In an alternative implementation form, the scheduling device 200 does not comprise a rate limiting unit 201, in that implementation form, the set of requests 202 are directly provided to the lookup vector prepare unit 203.

The lookup vector prepare unit 203 is configured to provide a lookup vector prepared set of requests 208 depending on a combination of the rate-limited set of requests 206 and a selection mask "raw_mask" 210. Depending on that combination the lookup vector prepare unit 203 provides a set of acknowledgements "ack_vec", i.e. an acknowledgement vector 212 to the set of requests 202. In an implementation form, the rate-limited set of requests 206 and the selection mask 210 are merged to provide the lookup vector prepared set of requests 208 and the set of acknowledgements 212. In another implementation form, the lookup vector prepare unit 203 is configured to provide a lookup vector prepared set of requests 208 depending on a combination of the set of requests 202 and a selection mask "raw_mask" 210 when the set of requests 202 are directly provided to the lookup vector prepare unit 203.

The prefix forest unit 205 is coupled to the lookup vector prepare unit 203 such that an output of the lookup vector prepare unit 203 is an input to the prefix forest unit 205. In an implementation form, one or more functional or logical units are coupled into the path between output of the lookup vector prepare unit 203 and input to the prefix forest unit 205.

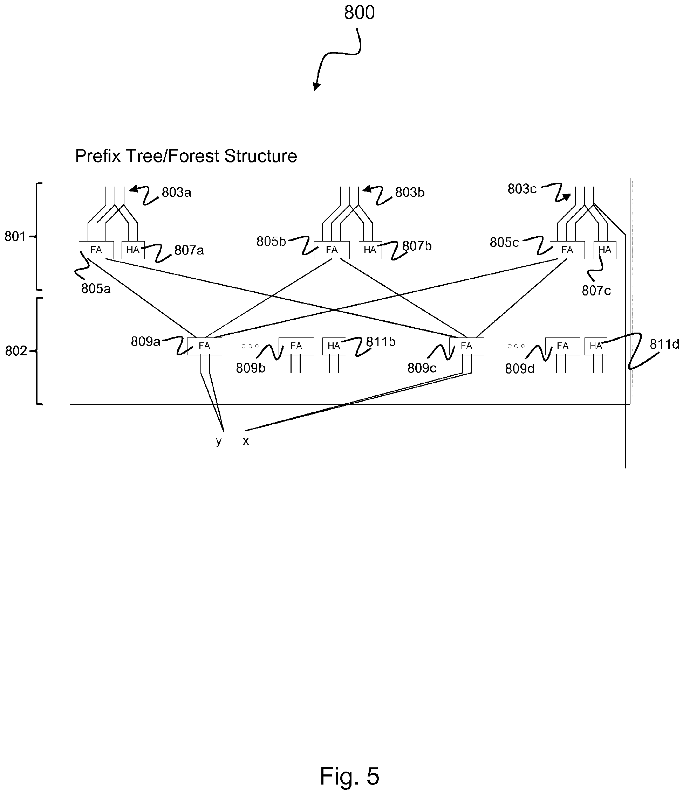

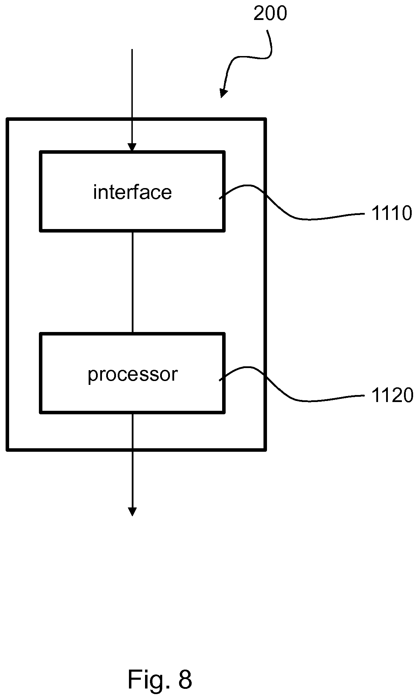

The prefix forest unit 205 is configured to provide the set of grants 204 as a function of the lookup vector prepared set of requests 208. The prefix forest unit 205 is further configured to provide the selection mask 210 based on the set of grants 204. An implementation form of the prefix forest unit 205 is described below with respect to Figures 5 and 8.

In an implementation form, the scheduling device 200 provides a number of P grants 204 upon a number of N requests 202, where the number P is smaller than the number N. In an implementation form the number P is approximating the number N such that in each clock cycle most of the N requests are scheduled and only a small number of N-P requests are stored in the scheduling device 200 for further processing. In an implementation form the rate limiting unit 201 is configured to limit the rate of the set of requests 202 depending on the rate of the acknowledgements 212. If the rate of acknowledgements is high, the rate limitation performed by the rate limiting unit 201 is small, thus the throughput of the scheduling device 200 is high and the delay time of the requests 202 being processed by the scheduling device 200 is low. If the rate of acknowledgements is small the rate limitation performed by the rate limiting unit 201 is high, thus the throughput of the scheduling device 200 is low and the delay time of the requests 202 being processed by the scheduling device 200 is large. The scheduling device 200 is thus able to flexibly process incoming requests.

In an implementation form, the processing of the scheduling device 200 is based on queue groups the set of requests 202 and the set of acknowledgements 212 are assigned to. In an implementation form, queue groups are configured to implement priority queues, i.e. groups of queues having different priorities and therefore different delay times depending on their priority. The set of request 202 are assigned to different priorities. A request 202 assigned to a high priority is processed faster than a request assigned to a low priority.

In an implementation form, the scheduling device 200 is constructed from an N→1 arbiter that selects P inputs from up to N requests 202. In an implementation form, the requests 202 are built out of input queues states. Each queue in the input of the system sends a request 202 to the scheduling device 200 every clock and receives an acknowledge 212 that indicates that the request 202 was received by the scheduler 200 and would be granted in the next future. When a queue has received an acknowledge 212 it can already send the next request 202. In an implementation form, a request 202 is sent to the scheduler 200 for every message in the input queues.

The scheduler 200 is based on a detachment between scheduling and acknowledging requests. This detachment enables the scheduler 200 to supply the Requestor module also called Requestor side with an acknowledge vector 212 almost immediately and therefore enables the requestor module to supply the scheduler 200 with new requests 202 every clock. The actual selection is done only a single clock or possibly several clocks after, but is detached from the acknowledged requests.

The request vector 202 is masked according to the rate limiting unit 201 which is responsible for the rate limiting of each of the groups type. The result 206 is sent to the lookup vector prepare unit (LVP) 203 which is responsible for merging the last selected requests with the new request vector 206. The lookup vector prepare unit 203 merges the two vectors 206 and 210, sends the new vector 208 for the prefix forest unit (PFF) 205 for the selection, and sends an acknowledge vector 212 to the Requestor side.

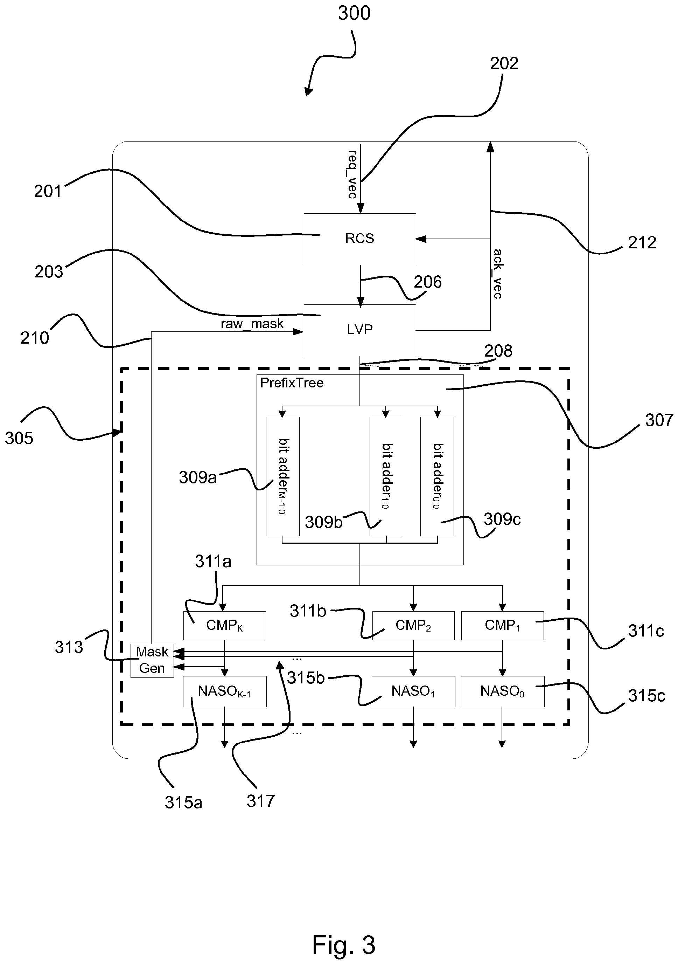

Fig. 3 shows a block diagram of a scheduling device 300 according to an implementation form. The scheduling device 300 is configured for receiving a set of requests "req vec", i.e. a request vector 202 and for providing a set of grants "Qsel_1, Qsel_2, ..., Qsel_p" 304 to the set of requests 202. The scheduling device 300 comprises a rate limiting unit (RCS) 201 which may correspond to the rate limiting unit 201 described with respect to Fig. 2, a lookup vector prepare unit (LVP) 203 which may correspond to the lookup vector prepare unit 203 described with respect to Fig. 2 and a prefix forest unit (PFF) 305 which may be an implementation form of the prefix forest unit 205 described with respect to Fig. 2.

The rate limiting unit 201 is configured for limiting a rate of the set of requests 202 according to a scheduling scheme. The rate limiting unit 201 provides a rate-limited set of requests 206 based on the set of requests 202. The lookup vector prepare unit 203 is coupled to the rate limiting unit 201 such that an output of the rate limiting unit 201 is an input to the lookup vector prepare unit 203. In an implementation form, one or more functional or logical units are coupled into the path between output of the rate limiting unit 201 and input to the lookup vector prepare unit 203. The lookup vector prepare unit 203 is configured to provide a lookup vector prepared set of requests 208 depending on a combination of the rate-limited set of requests 206 and a selection mask "raw_mask" 210. Depending on that combination the lookup vector prepare unit 203 provides a set of acknowledgements "ack_vec", i.e. an acknowledgement vector 212 to the set of requests 202.

The prefix forest unit 305 comprises a prefix tree 307, a set of compare (CMP) modules 311a, 311b and 311c, a mask generator 313 and a set of Not_And_Shift_One (NASO) modules 315a, 315b and 315c.

The prefix tree 307 is an ordered tree data structure that is used to store an associative array where the keys are usually strings. Unlike a binary search tree, no node in the tree 307 stores the key associated with that node; instead, its position in the tree 307 defines the key with which it is associated. All the descendants of a node have a common prefix of the string associated with that node, and the root is associated with the empty string. Values are normally not associated with every node, only with leaves and some inner nodes that correspond to keys of interest.

In an implementation form of the prefix tree 307 looking up a key of length $m$ takes in the worst case a time at the order of $O(m)$. The simple operations the prefix tree 307 uses during lookup, such as array indexing using a character, are fast on real machines. The prefix tree 307 is space-efficient when containing a large number of short keys, since nodes are shared between keys with common initial subsequences. The prefix tree 307 facilitates longest-prefix matching.

The number of internal nodes from root to leaf equals the length of the key. Balancing the prefix tree 307 is therefore of no concern. The prefix tree 307 supports ordered iteration and facilitates longest-prefix matching, as a consequence performing such a "closest fit" find can, depending on implementation, be as quick as an exact find. In contrast to an hash table the prefix tree 307 is faster on average at insertion than a hash table because the hash table must rebuild its index when it becomes full which is a very expensive operation. The prefix tree 307 therefore has much better bounded worst-case time costs, which is important for latency-sensitive programs. Since no hash function is used, the prefix tree 307 is generally faster than a hash table for small keys.

In the implementation form depicted in Fig. 3 the prefix tree 307 comprises a set of bit adders 309a, 309b and 309c for implementing the tree. In an implementation form, the prefix tree 307 that yields P results implements the following function on the input vector $v(i)$, i.e., the lookup vector prepared vector:

$$f_z(i : i \in \mathbb{N}) = f_x(i) + f_y(i)$$

$$= \begin{cases} \displaystyle\sum_{j=0}^{i} v(i), & \displaystyle\sum_{j=0}^{i} v(i) < P \\[2em] P, & \displaystyle\sum_{j=0}^{i} v(i) \geq P \end{cases}$$

The fx(i) and fy(i) are function notations. This notation is used to show the mathematical concept behind the physical implementation, and to show that for each output i the above sigma(sum) is computed. The computation is done by summing fx(i) and fy(i) so that to achieve the required result. The computed values are $f_x(i)$ and $f_y(i)$ so that the required result is achieved by combining the different possible results of both according to the prefix tree theorem. The output of the prefix tree process is constructed from two sets of 2*N numbers (logN bits each) that represent the function result to the input vector. For each set of numbers (x,y), the result of the prefix tree process is the addition x+y. The delay complexity of the prefix tree process is of the order O(logN).

The output of the prefix forest unit 305 is a set of numbers called Z and for each number $Z_i$ in Z it holds that $X_i+Y_i=Z_i$. X and Y show a specific example of x and y, respectively, Xi represents the ith specific example X of x, Yi represents the ith specific example Y of y. Instead of performing the actual addition there is the option to let the next phase of the mechanism, that is the comparing phase, use the raw material of $X_i$ and $Y_i$ and instead of comparing each number in Z to the relevant values, it compares a couple to a known set of options and by that it can save the latency that is caused by putting $X_i$ and $Y_i$ into an adding device.

Each compare module 311a, 311b, 311c receives all N sets and extracts an N bit result vector 317. The result vector 317 of compare module number J includes ones on input sets in such a manner that their sum is J. The comparison is done by the compare modules 311a, 311b, 311c by checking all possible combinations of X and Y.

In an implementation form, the possible variation of X and Y for each number, in this example varying from 1 through 8, is according to Table 1.

Table 1: possible variations of X and Y for each number.

| 0 | | 1 | | 2 | | 3 | | 4 | | 5 | | 6 | | 7 | | 8 | |
|---|---|---|---|---|---|---|---|---|---|---|---|---|---|---|---|---|---|
| X | Y | X | Y | X | Y | X | Y | X | Y | X | Y | X | Y | X | Y | X | Y |
| 0 | 0 | 1 | 0 | 2 | 0 | 3 | 0 | 4 | 0 | 5 | 0 | 6 | 0 | 7 | 0 | 8 | 0 |
| | | | | | | | | 0 | 4 | 1 | 4 | 2 | 4 | 3 | 4 | 4 | 4 |

There are only a maximum of two possible combinations for each output. In order to build the selection mask "raw_mask" which is sent back to the lookup vector prepare unit 203 a mask generator 313 receives the result vector 317 and performs a logic NOR operation on the rest of the outputs. This makes the selection mask "raw_mask" have a '1' for each result which is not 0 to P, i.e. bigger than P, so that it can serve as a mask for the last vector. The Not_And_Shift_One modules 315a, 315b, 315c are configured to perform a logic NAND operation followed by a 1 bit shift operation on their input vector. The Not_And_Shift_One modules 315a, 315b, 315c are responsible to find the first one in the N bit vector received in its inputs and to extract the outputs to the requestor side. The outputs of the Not_And_Shift_One modules 315a, 315b, 315c form the set of grants 204 as described with respect to Figure 2 which are provided to the requestor side.

In an implementation form, the scheduling process of the scheduling device 300 starts with a shaper corresponding to the rate limiting unit 201 that masks the bits that belongs to queues that are not eligible according to the shaper 201. The results corresponding to the rate-limited request vector 206 are then sent to the lookup vector prepare unit 203 that masks, shifts and joins the rate-limited request vector 206 according to the last chosen selection. The shift is used to perform a round-robin between the requests. The result of the shifter corresponding to the lookup vector prepared set of requests 208 is sent to a bit adder 309a, 309b, 309c that is implemented as a parallel counter forest 305. The shifter is implemented as a static shifter. The last req_vec is masked with the mask vector 210.

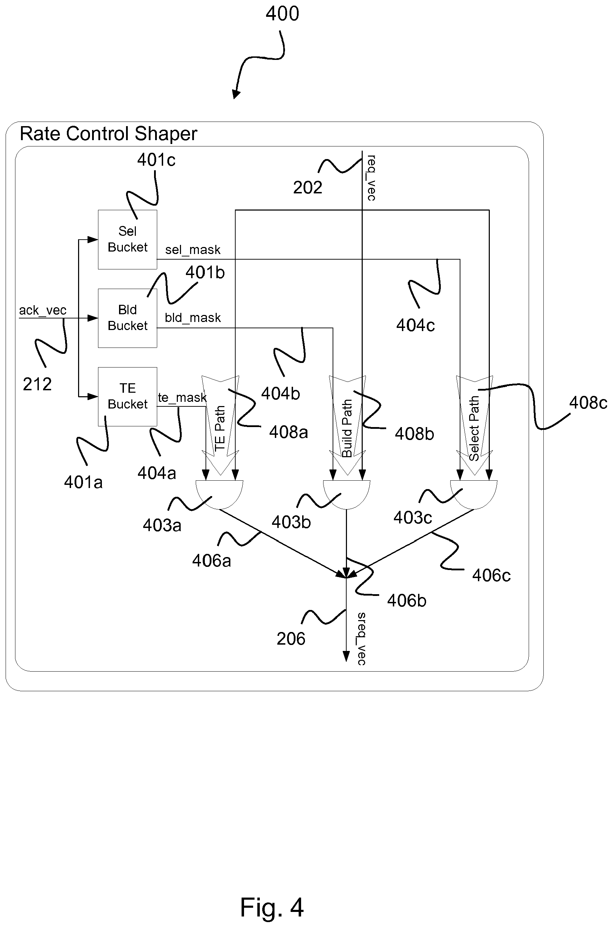

Fig. 4 shows a block diagram of a rate limiting unit 400 also called "rate control shaper" of a scheduling device according to an implementation form. The rate limiting unit 400 is an implementation form of the rate limiting unit 201 as described with respect to Figures 2 and 3. The rate limiting unit 400 receives the set of requests 202 and the set of acknowledgements 212 as described with respect to Figures 2 and 3 and provides the rate-limited set of requests 206 as described with respect to Figures 2 and 3. The rate limiting unit 400 comprises a set of buckets 401a, 401b, 401c, e.g. memories, for temporarily storing the set of acknowledgements 212 according to a specific queue group the acknowledgements 212 and the buckets 401a, 401b, 401c are assigned to. In another implementation form, the group shapers, also called shaper buckets, 105a, 105b and 105c as depicted in Fig. 1 are implemented by the group shapers 401a, 401b and 401c of the rate limiting unit 400.

The rate limiting unit 400 further comprises a set of bit adders 403a, 403b, 403c for performing bit additions on the inputs, where each bit adder is assigned to a specific queue group according to the assignment of the buckets 401a, 401b and 401c. The bit adders 403a, 403b, 403c are configured to add outputs 404a, 404b, 404c of the bucket modules 401a, 401b, 401c assigned to a respective queue group to requests 102 assigned to the corresponding queue group. Outputs 406a, 406b, 406c of the bit adders 403a, 403b, 403c form the set of new requests 106.

In the implementation form depicted in Fig. 4 a number of three different queue groups are used: A first one "TE" processed by a TE path 408a, a second one "Bid" processed by a Build path 408b and a third one "Sel" processed by a Select path 408c. Acknowledgements of the set of acknowledgements 212 assigned to the "TE" queue group are stored in the first bucket 401a and processed by the first bit adder 403a for adding "TE" path bits of the output 404a of the "TE" bucket 401a to corresponding bits of the request vector 202 assigned to the "TE" queue group. Acknowledgements of the set of acknowledgements 212 assigned to the "Bid" queue group are stored in the second bucket 401b and processed by the second bit adder 403b for adding "Bid" path bits of the output 404b of the "Bld" bucket 401b to corresponding bits of the request vector 202 assigned to the "Bld" queue group. Acknowledgements of the set of acknowledgements 212 assigned to the "Sel" queue group are stored in the third bucket 401c and processed by the third bit adder 403c for adding "Sel" path bits of the output 404c of the "Sel" bucket 401c to corresponding bits of the request vector 202 assigned to the "Sel" queue group. A combination of the added bits added by the three bit adders 403a, 403b and 403c of the TE path 408a, the Build path 408b and the Select path 408c forms the rate-limited set of requests 206.

In an implementation form, the Rate Control Shaper, i.e. the rate limiting unit 400 is constructed from three shaper buckets 401a, 401b and 401c, one for each group of queues, and a mask register that masks the non-idle queues that are not eligible. The rate control shaper 400 manages the shaper buckets 401a, 401b, 401c according to the acknowledgement vector "ack_vec" 212 it receives. Each clock the acknowledgement vector 212 of each group that are received from the lookup vector prepare unit 203 (these that are not masked) are summed using a bit_adder 403a, 403b, 403c and decreased from the group's bucket 401a, 401b, 401c. On each clock a configurable amount denoted as "qroup_quanton" is added to the group bucket 401a, 401b, 401c. When the bucket size is zero or less, the group is masked from the eligibility vector. When the group bucket is larger than a configurable amound denoted as "qroup_max_quantom" the group bucket is assigned to qroup_max_quantom.

The gate-tree computation is made in a prefix forest unit of a scheduling device according to an implementation form, the Prefix Tree that yields P results implements the following function on the input vector $v(i)$:

$$f_z(i: i \in \mathbb{N}) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}$$

The computed values are $f_x(i)$ and $f_y(i)$ so that the required result is achieved by combining the different possible

EP 3 011 706 B1

results of both according to the prefix tree theorem. The output of the prefix tree process is constructed from two sets of 2*N numbers (logN bits each) that represent the function result to the input vector. For each set of numbers (x,y), the result of the prefix tree process is the addition x+y. The delay complexity of the prefix tree process is O(lgn). Since Y holds only the two MSBs the possible combinations of X and Y which are relevant are much smaller.

Fig. 5 shows a schematic diagram of prefix tree 800 implemented in a prefix forest unit of a scheduling device according to an implementation form. The prefix forest unit may correspond to a prefix forest unit 205 as described with respect to Fig. 2 or to a prefix forest unit 305 as described with respect to Fig. 3. In an implementation form, the prefix tree 800 implements the gate-tree computation as mentioned above.

The prefix tree 800 comprises a first level 801 and a second level 802. The first level 801 receives three input vectors 803a, 803b, 803c, each one partitioned between first arithmetic units "FA" 805a, 805b, 805c and second arithmetic units 807a, 807b, 807c and provides outputs to the second level 802. The second level 802 comprises first arithmetic units "FA" 809a, 809b, 809c, 809d and second arithmetic units "HA" 811b, 811d. The interconnection between the first arithmetic units "FA" of the first level 801 and the first arithmetic units "FA" of the second level 802 form the outputs x and y such that the prefix tree 800 yields P results implementing the following function on the input vector *v(i)* 803a, 803b, 803c:

$$f_z(i: i \in \mathbb{N}) = f_x(i) + f_y(i).$$

For determining the performance of a scheduling device implementing a prefix tree 800, the following issues have to be considered. In the design there is one clear longest path that requires addressing. This longest path starts at the lookup vector prepare unit (LVP) 203 described with respect to Figures 2 and 3. It goes through the Gate Tree 307 as depicted in Fig. 3, passes the Compare 311a, 311b, 311c units and the Mask generator 313 depicted in Fig. 3 and returns back to the LVP 203 depicted in Fig. 3.

Performing an estimated analysis of the propagation delay for an input vector of size N results in the following delay times for each phase. The LVP output is registered so it is considered zero gates resulting in a zero delay time. The gate tree is constructed from FA and HA arithmetic units. These are actually constructed from two simple gates which leads to an estimated delay of 2*LgN gates. However, standard libraries have complex gates that can perform these standard functions in one complex gate, thereby resulting in a delay time of LgN. The compare phase is constructed from several compares done in parallel, thereby resulting in a delay time of 4 gates. The return back to the LVP has another gate and sample, thereby resulting in a delay time of 1 gate. In summary, the delay time adds to the following value:

$$\text{GateTree}_{PD} + \text{Compare}_{PD} + \text{MaskGen}_{PD} + \text{Mask}_{PD} + \text{MuxShift}_{PD} = LgN + 1 + 3 + 1 + 1 =$$

$$Lg(2*N) + 6$$

A worst case propagation delay estimation is summarized in Table 2.

Table 2: a calculation for a worst case propagation delay through a prefix tree according to an implementation form

| Number Of Queues (N) | 16 | 32 | 64 | 128 | 256 |
|---|---|---|---|---|---|
| Propagation Delay Estimation | 5+6=11 Gates (16 atomic) | 6+6=12 Gates (18 atomic) | 7+6=13 Gates (20 atomic) | 8+6=14 Gates (22 atomic) | 9+6=15 Gates (24 atomic) |

In another implementation form, the scheduling device 200 comprises an interface 1110 and a processor 1120 as depicted in Fig. 8. The interface 1110 is adapted for receiving the set of requests 202, and outputting the set of grants 204 and the selection mask 210. One or more units of the previous embodiments according to Fig. 2 to Fig. 4 are in a form of the processor 1120, the processor 1120 performs the corresponding steps of the units in order to provide the functionalities thereof.

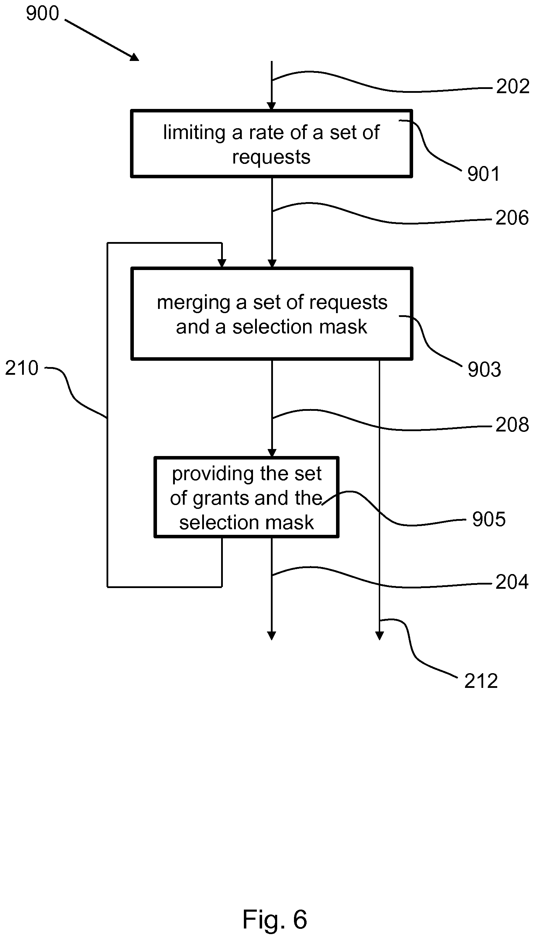

Fig. 6 shows a schematic diagram of a scheduling method 900 according to an implementation form. The scheduling method 900 for scheduling a set of requests 202 and providing a set of grants 204 to the set of requests 202 comprises limiting 901 a rate of the set of requests 202 according to a scheduling scheme in order to provide a rate-limited set of requests 206. The scheduling method 900 comprises merging 903 a set of requests, i.e., 202 or 206, and a selection mask (210) in order to provide a lookup vector prepared set of requests 208 and a selection mask 210 and a set of acknowledgements 212 to the set of requests 202. The scheduling method 900 comprises providing 905 the set of grants 204 as a function of the lookup vector prepared set of requests 208 and providing the selection mask 210

10

based on the set of grants 204. As discussed it the previous scheduling device embodiment, the step of limiting 901 the rate of a set of requests is optional, when the limiting step is performed, the merging 903 is based on the rate limited set of requests 206, otherwise the merging 903 is performed on the set of requests 202 directed.

In an implementation form of the method 900, the lookup vector prepared set of requests 208 depends on the rate-limited set of requests 206 combined with the previous non-granted set of requests 202. In an implementation form of the method 900, the lookup vector prepared set of requests 208 is a super-set of non-granted old ones of the set of requests 202 and new ones of the rate-limited set of requests.

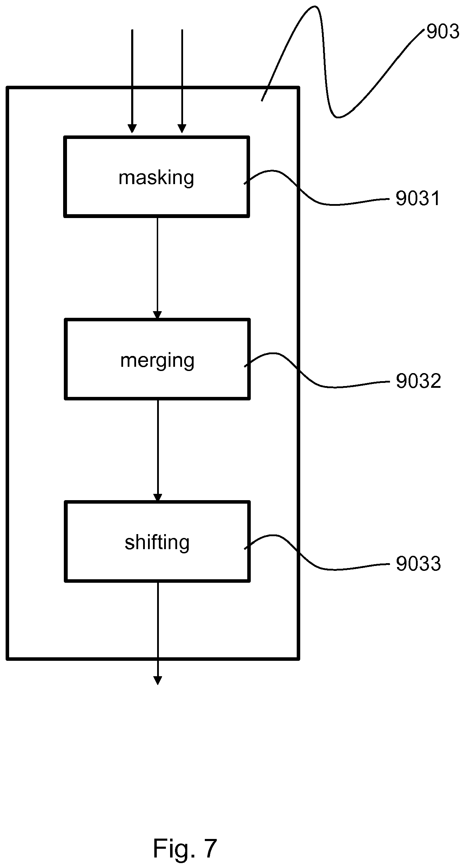

Fig. 7 shows a flow chart of merging 903 of the scheduling method 900 according to an implementation form. The merging 903 the set of requests 202 or 206 and a selection mask 210 comprises: masking 9031 a current set of requests based on the selection mask 210 to provide a masked set of requests; merging 9032 the masked set of requests 520 with the rate-limited set of requests 206 to provide the current set of requests; and shifting 9033 the current set of requests based on a shifted version of the selection mask 210 to provide the lookup vector prepared set of requests 208.

In an implementation form, the scheduling method 900 is implemented by the scheduling device 200 as described with respect to Fig. 2 or by the scheduling device 300 as described with respect to Fig. 3.

**Claims**

1. Scheduling device (200) for receiving a set of requests (202) to be scheduled, the scheduling device (200) confirming the reception of the set of requests (202) by a set of acknowledgements (212) indicating received requests that would be granted in the next future, and providing a set of grants (204) to the set of requests (202), the scheduling device (200) comprising:

   a lookup vector prepare unit (203) configured to merge the set of requests (202, 206) and a selection mask (210) in order to provide a lookup vector prepared set of requests (208), and to provide the set of acknowledgements (212) to the set of requests (202), wherein the lookup vector prepared set of requests (208) is a super-set of non-granted previously received requests and new received requests and the set of acknowledgements (212) indicates the requests of the lookup vector prepared set of requests (208); and
   a prefix forest unit (205) coupled to the lookup vector prepare unit (203), wherein the prefix forest unit (205) comprises a prefix tree (307, 800) and wherein the prefix forest unit (205) is configured to provide the set of grants (204) as a function of the lookup vector prepared set of requests (208) and to provide the selection mask (210) based on the set of grants (204);
   **characterized in that**
   an output of the prefix forest unit (205) is determined as a set Z of numbers and for each number $Z_i$ in Z it holds that $X_i+Y_i=Z_i$ and
   wherein the prefix tree (800) is configured to provide for a number of N input values a number of P results, wherein the result $f_z(i)$ of the prefix tree (800) for an input v(i) and an integer number i is determined according to the following formula:

$$f_z(i: i \in \mathbb{N}) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}.$$

2. The scheduling device (200) of claim 1, comprising a rate limiting unit (201) couple to the lookup vector prepare unit (203), wherein the rate limiting unit (201) is configured to limit a rate of the set of requests (202) according to a scheduling scheme in order to provide a rate-limited set of requests (206), accordingly, the set of requests (206) merged by the lookup vector prepare unit (203) is the rate-limited set of requests (206).

3. The scheduling device (200) of claim 2, wherein the rate limiting unit (201) is configured to filter requests (202) of requestor-groups that have passed a configurable rate of acknowledgments (212).

4. The scheduling device (200) of claim 2 or 3, wherein the scheduling scheme is based on queue groups the set of requests (202) and the set of acknowledgements (212) are assigned to.

5. The scheduling device (200) of claim 4, wherein the rate limiting unit (201) comprises a set of bucket buffers (401a, 401b, 401c), each bucket buffer assigned to one of the queue groups for storing acknowledgements of the set of acknowledgements (212) assigned to the one of the queue groups.

6. The scheduling device (200) of claim 1, wherein the prefix tree (800) is configured to provide the selection mask (210) in order to differentiate between the results being greater than P and the results being smaller or equal than P.

7. Method (900) performed by a scheduling device (200) for scheduling a set of requests (202) to be scheduled, confirming the reception of the set of requests (202) by a set of acknowledgements (212) indicating received requests that would be granted, and providing a set of grants (204) to the set of requests (202), the method comprising:

merging (903) the set of requests (202, 206) and a selection mask (210) in order to provide a lookup vector prepared set of requests (208) and the set of acknowledgements (212) to the set of requests (202), wherein the lookup vector prepared set of requests (208) is a super-set of non-granted previously received requests and new received requests and the set of acknowledgements (212) indicates the requests of the lookup vector prepared set of requests (208); and

providing (905) the set of grants (204) by means of a prefix forest unit (205) comprising a prefix tree (307, 800) as a function of the lookup vector prepared set of requests (208) and providing (905) the selection mask (210) based on the set of grants (204);

**characterized in that**

an output of the prefix forest unit (205) is determined as a set Z of numbers and for each number $Z_i$ in Z it holds that $X_i+Y_i=Z_i$ and

wherein the prefix tree (800) is configured to provide for a number of N input values a number of P results, wherein the result $f_z(i)$ of the prefix tree (800) for an input v(i) and an integer number i is determined according to the following formula:

$$f_z(i: i \in \mathbb{N}) = f_x(i) + f_y(i)$$

$$= \begin{cases} \sum_{j=0}^{i} v(i), & \sum_{j=0}^{i} v(i) < P \\ \\ P, & \sum_{j=0}^{i} v(i) \geq P \end{cases}$$

8. The method of claim 7, further comprising limiting (901) a rate of the set of requests (202) according to a scheduling scheme in order to provide a rate-limited set of requests (206), accordingly, the set of requests (206) merged by the lookup vector prepare unit (203) is the rate-limited set of requests (206).

9. The method of claim 8, wherein the merging (903) the set of requests (202, 206) and a selection mask (210) comprises:

masking (9031) a current set of requests based on the selection mask (210) to provide a masked set of requests;
merging (9032) the masked set of requests with the rate-limited set of requests (206) to provide the current set of requests; and
shifting (9033) the current set of requests based on a shifted version of the selection mask (210) to provide the lookup vector prepared set of requests (208).

**Patentansprüche**

1. Planungseinrichtung (200) zum Empfangen einer Menge von zu planenden Anforderungen (202), wobei die Planungseinrichtung (200) den Empfang der Menge von Anforderungen (202) durch eine Menge von Bestätigungen (212), die empfangene Anforderungen angeben, die in der nächsten Zukunft bewilligt werden würden, bestätigt und eine Menge von Bewilligungen (204) an die Menge von Anforderungen (202) bereitstellt, wobei die Planungseinrichtung (200) Folgendes umfasst:

eine Nachschlagevektor-Erstellungseinheit (203), die zum Zusammenlegen der Menge von Anforderungen (202, 206) und einer Auswahlmaske (210), um eine mit einem Nachschlagevektor erstellte Menge von Anforderungen (208) bereitzustellen, und zum Bereitzustellen der Menge von Bestätigungen (212) an die Menge von Anforderungen (202) konfiguriert ist, wobei die mit dem Nachschlagevektor erstellte Menge von Anforderungen (208) eine Super-Menge von nicht bewilligten, zuvor empfangenen Anforderungen und neu empfangenen Anforderungen ist und die Menge von Bestätigungen (212) die Anforderungen der mit dem Nachschlagevektor erstellten Menge von Anforderungen (208) angibt; und

eine Präfix-Wald-Einheit (205), die mit der Nachschlagevektor-Erstellungseinheit (203) gekoppelt ist, wobei die Präfix-Wald-Einheit (205) einen Präfix-Baum (307, 800) umfasst und wobei die Präfix-Wald-Einheit (205) zum Bereitstellen der Menge von Bewilligungen (204) als eine Funktion der mit dem Nachschlagevektor erstellten Menge von Anforderungen (208) und zum Bereitstellen der Auswahlmaske (210) basierend auf der Menge von Bewilligungen (204) konfiguriert ist;

**dadurch gekennzeichnet, dass**

eine Ausgabe der Präfix-Wald-Einheit (205) als eine Menge Z von Zahlen bestimmt wird und für jede Zahl $Z_i$ in Z gilt, dass $X_i + Y_i = Z_i$, und

wobei der Präfix-Baum (800) zum Bereitstellen einer Anzahl von P Ergebnissen für eine Anzahl von N Eingabewerten konfiguriert ist, wobei das Ergebnis $f_z(i)$ des Präfix-Baums (800) für eine Eingabe $v(i)$ und eine ganze Zahl i gemäß der folgenden Formel bestimmt wird:

$$f_z\left(i : i \in \mathbb{N}\right) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}.$$

2. Planungseinrichtung (200) nach Anspruch 1, die eine mit der Nachschlagevektor-Erstellungseinheit (203) gekoppelte Ratenbegrenzungseinheit (201) umfasst, wobei die Ratenbegrenzungseinheit (201) zum Begrenzen einer Rate der Menge von Anforderungen (202) gemäß einem Planungsschema konfiguriert ist, um eine ratenbegrenzte Menge von Anforderungen (206) bereitzustellen, dementsprechend ist die durch die Nachschlagevektor-Erstellungseinheit (203) zusammengelegte Menge von Anforderungen (206) die ratenbegrenzte Menge von Anforderungen (206).

3. Planungseinrichtung (200) nach Anspruch 2, wobei die Ratenbegrenzungseinheit (201) zum Filtern von Anforderungen (202) von Anforderer-Gruppen, die eine konfigurierbare Rate an Bestätigungen (212) übergeben haben, konfiguriert ist.

4. Planungseinrichtung (200) nach Anspruch 2 oder 3, wobei das Planungsschema auf Warteschlangengruppen basiert, zu denen die Menge von Anforderungen (202) und die Menge von Bestätigungen (212) zugeordnet sind.

5. Planungseinrichtung (200) nach Anspruch 4, wobei die Ratenbegrenzungseinheit (201) eine Menge von "Bucket"-Puffern (401a, 401b, 401c) umfasst, wobei jeder "Bucket"-Puffer zu einer der Warteschlangengruppen zugeordnet ist, um Bestätigungen der Menge von Bestätigungen (212), die der einen der Warteschlangengruppen zugeordnet ist, zu speichern.

6. Planungseinrichtung (200) nach Anspruch 1, wobei der Präfix-Baum (800) zum Bereitstellen der Auswahlmaske (210) konfiguriert ist, um zwischen den Ergebnissen, die größer als P sind, und den Ergebnissen, die kleiner oder gleich P sind, zu differenzieren.

7. Verfahren (900), das durch eine Planungseinrichtung (200) durchgeführt wird, zum Planen einer Menge von zu planenden Anforderungen (202), zum Bestätigen des Empfangs der Menge von Anforderungen (202) durch eine Menge von Bestätigungen (212), die empfangene Anforderungen, die bewilligt werden würden, angeben, und zum Bereitstellen einer Menge von Bewilligungen (204) an die Menge von Anforderungen (202), wobei das Verfahren Folgendes umfasst:

Zusammenlegen (903) der Menge von Anforderungen (202, 206) und einer Auswahlmaske (210), um eine mit einem Nachschlagevektor erstellte Menge von Anforderungen (208) und die Menge von Bestätigungen (212) an die Menge von Anforderungen (202) bereitzustellen, wobei die mit dem Nachschlagevektor erstellte Menge von Anforderungen (208) eine Super-Menge von nicht bewilligten, zuvor empfangenen Anforderungen und neu empfangenen Anforderungen ist und die Menge von Bestätigungen (212) die Anforderungen der mit dem Nachschlagevektor erstellten Menge von Anforderungen (208) angibt; und

Bereitstellen (905) der Menge von Bewilligungen (204) mittels einer Präfix-Wald-Einheit (205), die einen Präfix-Baum (307, 800) umfasst, als eine Funktion der mit dem Nachschlagevektor erstellten Menge von Anforderungen (208) und Bereitstellen (905) der Auswahlmaske (210) basierend auf der Menge von Bewilligungen (204);

**dadurch gekennzeichnet, dass**

eine Ausgabe der Präfix-Wald-Einheit (205) als eine Menge Z von Zahlen bestimmt wird und für jede Zahl $Z_i$ in Z gilt, dass $X_i + Y_i = Z_i$ und

wobei der Präfix-Baum (800) zum Bereitstellen einer Anzahl von P Ergebnissen für eine Anzahl von N Eingabewerten konfiguriert ist, wobei das Ergebnis $f_z(i)$ des Präfix-Baums (800) für eine Eingabe v(i) und eine ganze Zahl i gemäß der folgenden Formel bestimmt wird:

$$f_z\left(i : i \in \mathbb{N}\right) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}.$$

8. Verfahren nach Anspruch 7, das ferner Begrenzen (901) einer Rate der Menge von Anforderungen (202) gemäß einem Planungsschema umfasst, um eine ratenbegrenzte Menge von Anforderungen (206) bereitzustellen, dementsprechend ist die durch die Nachschlagevektor-Erstellungseinheit (203) zusammengelegte Menge von Anforderungen (206) die ratenbegrenzte Menge von Anforderungen (206).

9. Verfahren nach Anspruch 8, wobei das Zusammenlegen (903) der Menge von Anforderungen (202, 206) und einer Auswahlmaske (210) Folgendes umfasst:

Maskieren (9031) einer aktuellen Menge von Anforderungen basierend auf der Auswahlmaske (210), so dass eine maskierte Menge von Anforderungen bereitgestellt wird;

Zusammenlegen (9032) der maskierten Menge von Anforderungen mit der ratenbegrenzten Menge von Anforderungen (206), so dass die aktuelle Menge von Anforderungen bereitgestellt wird; und

Verschieben (9033) der aktuellen Menge von Anforderungen basierend auf einer verschobenen Version der Auswahlmaske (210), so dass die mit dem Nachschlagevektor erstellte Menge von Anforderungen (208) bereitgestellt wird.

**Revendications**

1. Dispositif (200) de programmation destiné à recevoir un ensemble de demandes (202) à programmer, le dispositif (200) de programmation confirmant la réception de l'ensemble de demandes (202) par un ensemble d'accusés de réception (212) indiquant des demandes reçues susceptibles d'être octroyées dans l'avenir proche, et fournissant un ensemble d'octrois (204) à l'ensemble de demandes (202), le dispositif (200) de programmation comportant :

une unité (203) de préparation de vecteurs de recherche configurée pour fusionner l'ensemble de demandes (202, 206) et un masque (210) de sélection afin de fournir un ensemble de demandes (208) issu de la préparation de vecteurs de recherche, et pour fournir l'ensemble d'accusés de réception (212) à l'ensemble de demandes (202), l'ensemble de demandes (208) issu de la préparation de vecteurs de recherche étant un sur-ensemble de demandes reçues précédemment non octroyées et de nouvelles demandes reçues et l'ensemble d'accusés de réception (212) indiquant les demandes de l'ensemble de demandes (208) issu de la préparation de vecteurs de recherche ; et

une unité (205) de forêt de préfixes couplée à l'unité (203) de préparation de vecteurs de recherche, l'unité (205) de forêt de préfixes comportant un arbre (307, 800) de préfixes et l'unité (205) de forêt de préfixes étant configurée pour fournir l'ensemble d'octrois (204) en fonction de l'ensemble de demandes (208) issu de la préparation de vecteurs de recherche et pour fournir le masque (210) de sélection d'après l'ensemble d'octrois (204) ;

**caractérisé en ce que**

une sortie de l'unité (205) de forêt de préfixes est déterminée comme un ensemble Z de nombres et, pour chaque nombre $Z_i$ dans Z, la relation $X_i + Y_i = Z_i$ est vérifiée et l'arbre (800) de préfixes étant configuré pour fournir, pour un nombre de valeurs d'entrée N, un nombre de résultats P, le résultat $f_z(i)$ de l'arbre (800) de préfixes pour une entrée v(i) et un nombre entier i étant déterminé selon la formule suivante :

$$f_z(i: i \in \mathbb{N}) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}.$$

2. Dispositif (200) de programmation selon la revendication 1, comportant une unité (201) de limitation de taux couplée à l'unité (203) de préparation de vecteurs de recherche, l'unité (201) de limitation de taux étant configurée pour limiter un taux de l'ensemble de demandes (202) selon un schéma de programmation afin de fournir un ensemble de demandes (206) à taux limité, l'ensemble de demandes (206) fusionné par l'unité (203) de préparation de vecteurs de recherche étant, en conséquence, l'ensemble de demandes (206) à taux limité.

3. Dispositif (200) de programmation selon la revendication 2, l'unité (201) de limitation de taux étant configurée pour filtrer des demandes (202) de groupes demandeurs ayant franchi un taux configurable d'accusés de réception (212).

4. Dispositif (200) de programmation selon la revendication 2 ou 3, le schéma de programmation étant basé sur des groupes de files d'attente auxquels sont affectés l'ensemble de demandes (202) et l'ensemble d'accusés de réception (212).

5. Dispositif (200) de programmation selon la revendication 4, l'unité (201) de limitation de taux comportant un ensemble de tampons (401a, 401b, 401c) à cases, chaque tampon à cases étant affecté à un des groupes de files d'attente pour stocker des accusés de réception de l'ensemble d'accusés de réception (212) affecté au groupe en question parmi les groupes de files d'attente.

6. Dispositif (200) de programmation selon la revendication 1, l'arbre (800) de préfixes étant configuré pour fournir le masque (210) de sélection afin de différencier les résultats qui sont supérieurs à P et les résultats qui sont inférieurs ou égaux à P.

7. Procédé (900) réalisé par un dispositif (200) de programmation pour programmer un ensemble de demandes (202) à programmer, confirmer la réception de l'ensemble de demandes (202) par un ensemble d'accusés de réception (212) indiquant des demandes reçues susceptibles d'être octroyées, et fournir un ensemble d'octrois (204) à l'ensemble de demandes (202), le procédé comportant les étapes consistant à :

fusionner (903) l'ensemble de demandes (202, 206) et un masque (210) de sélection afin de fournir un ensemble de demandes (208) issu de la préparation de vecteurs de recherche et l'ensemble d'accusés de réception (212) à l'ensemble de demandes (202), l'ensemble de demandes (208) issu de la préparation de vecteurs de recherche étant un sur-ensemble de demandes reçues précédemment non octroyées et de nouvelles demandes reçues et l'ensemble d'accusés de réception (212) indiquant les demandes de l'ensemble de demandes (208) issu de la préparation de vecteurs de recherche ; et

fournir (905) l'ensemble d'octrois (204) au moyen d'une unité (205) de forêt de préfixes comportant un arbre (307, 800) de préfixes en fonction de l'ensemble de demandes (208) issu de la préparation de vecteurs de recherche et fournir (905) le masque (210) de sélection d'après l'ensemble d'octrois (204) ;

**caractérisé en ce que**

une sortie de l'unité (205) de forêt de préfixes est déterminée comme un ensemble Z de nombres et pour chaque nombre $Z_i$ dans Z, la relation $X_i + Y_i = Z_i$ est vérifiée et l'arbre (800) de préfixes étant configuré pour fournir, pour un nombre de valeurs d'entrée N, un nombre de résultats P, le résultat $f_z(i)$ de l'arbre (800) de préfixes pour une entrée v(i) et un nombre entier i étant déterminé selon la formule suivante :

$$f_z(i: i \in \mathbb{N}) = f_x(i) + f_y(i)$$

$$= \begin{cases} \sum_{j=0}^{i} v(i), & \sum_{j=0}^{i} v(i) < P \\ P, & \sum_{j=0}^{i} v(i) \geq P \end{cases}.$$

8. Procédé selon la revendication 7, comportant en outre l'étape consistant à limiter (901) un taux de l'ensemble de demandes (202) selon un schéma de programmation afin de fournir un ensemble de demandes (206) à taux limité, l'ensemble de demandes (206) fusionné par l'unité (203) de préparation de vecteurs de recherche étant, en conséquence, l'ensemble de demandes (206) à taux limité.

9. Procédé selon la revendication 8, la fusion (903) de l'ensemble de demandes (202, 206) et d'un masque (210) de sélection comportant les étapes consistant à :

masquer (9031) un ensemble actuel de demandes d'après le masque (210) de sélection pour fournir un ensemble masqué de demandes ;
fusionner (9032) l'ensemble masqué de demandes avec l'ensemble de demandes (206) à taux limité pour fournir l'ensemble actuel de demandes ; et
décaler (9033) l'ensemble actuel de demandes d'après une version décalée du masque (210) de sélection pour fournir l'ensemble de demandes (208) issu de la préparation de vecteurs de recherche.

100

Scheduling Scheme

P
Issues

RR

103a

Traffic
Type I

104a

105a

103b

Traffic
Type II

104b

105b

103c

Traffic
Type III

104c

105c

102

101

Fig. 1

Fig. 2

Fig. 3

400

Rate Control Shaper

Fig. 4

800

Prefix Tree/Forest Structure

Fig. 5

900

202

limiting a rate of a set of
requests

901

206

merging a set of requests
and a selection mask

903

210

208

providing the set
of grants and the
selection mask

905

204

212

Fig. 6

903

masking — 9031

merging — 9032

shifting — 9033

Fig. 7

200

interface — 1110

processor — 1120

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **UGURDAG.** Fast two-pick n2n round-robin arbiter circuit. *ELECTRONIC LETTERS,* 21 June 2012, vol. 48 (13), 759-760